# EUROPÄISCHE PATENTSCHRIFT

(11) **EP 1 187 978 B1**
(45) Veröffentlichungstag und Bekanntmachung des Hinweises auf die Patenterteilung: **13.10.2004**
(21) Anmeldenummer: 00947782.9
(22) Anmeldetag: 06.06.2000
(51) Int. Cl.: F02K 9/62, F02K 9/64

(54) **SCHUBKAMMER-ANORDNUNG**
THRUST CHAMBER ASSEMBLY
SYSTEME DE CHAMBRE DE POUSSEE

(30) Priorität: 17.06.1999 DE 19927735
(43) Veröffentlichungstag der Anmeldung: 20.03.2002
(73) Patentinhaber: EADS SPACE Transportation GmbH, 28199 Bremen (DE)
(72) Erfinder: SOWA, Armin, D-85521 Ottobrunn (DE)
(74) Vertreter: Ulrich, Thomas
(86) Internationale Anmeldenummer: PCT/DE2000/001825
(87) Internationale Veröffentlichungsnummer: WO 2000/079115

(56) Entgegenhaltungen:
- EP-A- 0 780 564
- WO-A-96/25595
- DE-A- 4 137 638
- US-A- 3 719 046
- US-A- 5 780 157

## Beschreibung

Die Erfindung betrifft eine Schubkammer-Anordnung für Raumfahrt-Triebwerke, die insbesondere zur Lageregelung des Satelliten verwendet werden.

Raumfahrt-Triebwerke weisen einen Einspritzkopf auf, durch den beispielsweise der Treibstoff und der Oxydator in die Brennkammer einer Schubkammer-Anordnung eingespritzt werden. An der Innenwand der Gemisch-Aufbereitungskammer bildet sich ein Film aus Treibstoff und Oxydator an der im Betrieb eine gleichbleibende Dicke von ca. 0,5 mm besitzt und eine Aufheizung der Aufbereitungskammer-Wand verhindert. In der Praxis erwies sich dieser Film zeitweise als nicht stabil, wodurch die Temperatur in Bereichen der Aufbereitungskammer-Wand erhöhte und deren Festigkeit einschränkte.

Insbesondere beim gepulsten Betrieb, bei dem über die Zeit eine wesentlich geringere Menge an Brennmitteln, d.h. Treibstoff und Oxydator, in die Brennkammer eingespritzt werden als im stationären Betrieb, hat sich dieser Film aus noch nicht verbrannten Brennmitteln als nicht stabil erwiesen, da dieser marginale Kühlfilm durch den Wärmefluß von dem wesentlich heißeren engsten Düsenquerschnitt oder der Düsen-Verengung zur Verdampfung gebracht wird.

Gewisse Dokumente aus dem Stand der Technik haben sich bereits mit Fragen der Handhabung der bei Raketentriebwerken auftretenden Temperaturen beschäftigt:

Aus US 3,719,046 ist bekannt, die Brennkammer eines Raketentriebwerkes mit einer Wärmeleitung zu umgeben, welche ein mit einer Flüssigkeit getränktes dochtähnliches Material beinhaltet, das an die Brennkammer angrenzt. Die Flüssigkeit verdampft unter Aufnahme von Wärme aus der Brennkammer und der Flüssigkeitsdampf wird zu einem Wärmetauscher geführt, um dort wieder zu kondensieren. Anschließend wird die Flüssigkeit wieder dem dochtähnlichen Material zugeführt.

WO 96/25596 beschreibt eine Brennkammer für ein Raketentriebwerk, die eine Innenbeschichtung aus Rhodium, Iridium oder einer Rhodium-Iridium-Legierung aufweist, um eine Widerstandsfähigkeit gegen hohe Temperaturen sowie eine Korrosionsfestigkeit gegen unverbrannte Treibstoffanteile zu garantieren.

Diese Dokumente bieten jedoch keine Lösung für die oben genannten Probleme, die sich bei Raumfahrt-Triebwerken bezüglich des Kühlfilms ergeben.

Die Aufgabe der Erfindung ist es daher, die Schubkammer-Anordnung so zu gestalten, daß die über den Einspritz-Kopf zugeführten Brennmittel eines Satellitentriebwerks an dem Einspritzkopf-nahen Bereichen der Brennkammer-Innen-wand einen mit Sicherheit stabilen und homogenen Film ausbilden können.

Diese Aufgabe wird mit den kennzeichnenden Merkmalen des Anspruchs 1 gelöst. Alternative Ausführungsformen sind in den Unteransprüchen angegeben.

Die erfindungsgemäße Lösung hat den Vorteil, daß bereits vorhandene Schubkammer-Konstruktionen im wesentlichen bestehen bleiben können und nur mit einfachen Modifikationen eine verbesserte Betriebsfestigkeit erreicht werden können.

Im folgenden wird die Erfindung anhand der beigefügten Figuren beschrieben, die zeigen:
Figur 1 einen Längsschnitt durch eine Anordnung aus einem Einspritzkopf und einer Schubkammer für ein Satellitentriebwerk,
Figur 2 eine Anordnung aus zwei redundanten Triebwerken mit Schubkammern und mehrere Anordnungen zur Nutzung von in einer Schubkammer entstehenden Wärmeenergie.

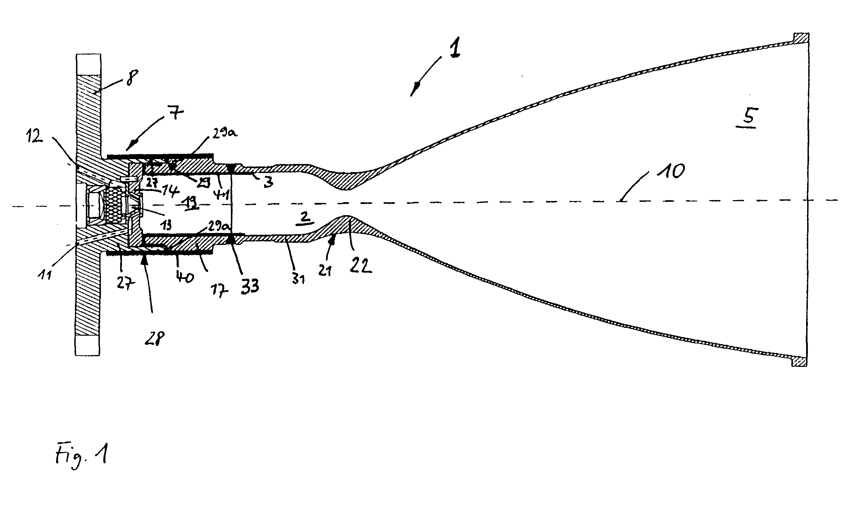

Die in der Figur 1 dargestellte Schubkammer-Anordnung 1 umfaßt eine Brennkammer 2 mit einer Brennkammer-Wand 3, eine an diese anschließende Expansionsdüse 5 und einen an dem freien Ende der Brennkammer 3 angeordneten Einspritzkopf 7, der über einen Flansch 8 am Satelliten (nicht gezeigt) befestigt ist. Der Flansch 8 dient zur Aufnahme der Treibstoff-Absperrventile für die Schubkammer-Anordnung 1. Die Schubkammer-Anordnung 1 ist im wesentlichen rotationssymmetrisch mit einer Längsachse 10 ausgebildet.

Der Einspritzkopf 7 weist zumindest einen Zuführungskanal 11 für den Brennstoff und zumindest einen Zuführungskanal 12 für den Oxydator auf. Als Brennstoff wird üblicherweise unsymmetrisches Hydrazin (MMH) und als Oxydator beispielsweise Stickstoff-Tetra-Oxyd (N₂O₄) verwendet. Die Zuführuhngskanäle 11, 12 enden in den Einspritzkopf 7 mit den zwei Teilen 13, 14. In diesem Einspritzkopf 7 werden die Treibstoffe in Rotation versetzt und treffen kegelartig auf die Brennkammer-Wand 3 auf.

Die Brennkammer-Wand 3 weist in ihrem dem Einspritzkopf 7 nahegelegenen Teil eine Aufbereitungskammer-Wand 17 auf, deren Innenseite eine Gemisch-Aufbereitungskammer 19 umgrenzt. Das den Einspritz-Kopf 7 gegenüberliegende Ende 21 der Brennkammer-Wand 3 bildet auf ihrer Innenseite eine Verengung 22 aus, von wo aus die Schubkammer-Anordnung 1 in die Expansionsdüse 5 übergeht.

Die Aufbereitungskammer-Wand 17 ist üblicherweise aus Chrom-Nickel-Molybdän-Stählen gebildet, das bei Temperaturen zwischen 200 und 800° C mit Innendrücken von ca. 10 bar belastbar ist Die Chrom-Nickel-Molybdän-Stähle zeichnen sich durch sehr gute Wärmestandfestigkeit aus und unterliegen damit geringerem Verschleiß. Dagegen sind diese Stähle gegen Heißgas-Korrosion empfindlich.

Die Brennkammer-Wand 3 und das dieser zugewandte zylinderförmige Ende 27 des Einspritz-Kopfs 7 sind ihrem Übergangsbereich vorzugsweise überlappend ineinander geschoben, wobei das zylinderförmige Ende 27 des Einspritz-Kopfs 7 einen Teil der Brennkammer-Wand 3 umgibt. Mittels einer Schweißnaht 29 ist das zylinderförmige Ende 27 mit der entsprechenden Stelle 29a der Aufbereitungskammer-Wand 17 verbunden. Weiterhin ist die Brennkammer-Wand 3 in axialer Richtung gesehen aus zwei Teilen mit verschiedenen Materialien gebildet, so daß diese aus zwei Teilen zusammengesetzt ist, aus einer Aufbereitungskammer-Wand 17 und einem zweiten Teil 31 der Brennkammer-Wand 3. Die Aufbereitungskammer-Wand 17 ist mit dem zweiten Teil 31 an der Stelle 33 verschweißt.

Die Schubkammer-Anordnung 1 ist zumindest in einem Bereich der Außenseite der Brennkammer-Wand 3 mit einer wärmeleitenden Schicht 40 versehen. Zusätzlich ist diese wärmeleitende Schicht 40 auch zumindest in einem Bereich der Außenseite des zylinderförmigen Endes 27 des Einspritz-Kopfs vorgesehen. Wenn die wärmeleitende Schicht 40 sowohl an dem zylinderförmigen Ende 27 als auch an der Brennkammer-Wand 3 vorgesehen ist, sind deren Außenseiten als in axialer Richtung gleichmäßig verlaufende Konturlinien ausgebildet. Insbesondere kann die wärmeleitende Schicht 40 als zylindrischer Mantel ausgebildet sein, der zumindest einen Teil des zylinderförmigen Endes 27 und einen Teil der Brennkammer-Wand 3 umgibt. Die Außenseite des beschichteten Bereichs der Aufbereitungskammer-Wand 17 weist einen größeren Außendurchmesser auf, als der nichtbeschichtete Teil der Brennkammer-Wand 3.

Die wärmeleitende Schicht 40 ist im wesentlichen aus wärmeleitendem Material gebildet. Hierfür kommen Metalle, Metallegierungen und keramische Materialien in Frage. Vorzugsweise besteht die wärmeleitende Schicht aus Kupfer oder Beryllium oder Kupfer- oder Beryllium-Legierungen. Die wärmeleitende Schicht 40 kann auch aus Gold oder Silber gebildet sein. Die wärmeleitende Schicht 40 liegt vorzugsweise an zumindest Teilbereichen der Außenseite der Brennkammer-Wand 3 an.

Bereiche der Aufbereitungskammer-Wand 17 können mit Platin oder Gold beschichtet sein. Vorzugsweise ist die Beschichtung im Bereich zwischen dem zylinderförmigen Ende 27 und dem von diesem überlappten Ende der Aufbereitungskammer-Wand 17, in dem Bereich zwischen der Aufbereitungskammer-Wand 17 und dem Teil 14 des Einspritzkopfs 7 und zumindest einen Teil der Längsachse 10 zugewandten Innenseite der Aufbereitungskammer-Wand 17 vorgesehen. Die Platin- oder Goldbeschichtung 41 dient dazu, die Oxydation der Aufbereitungskammer-Wand 17 zu verhindern.

Durch die erfindungsgemäße wärmeleitende Schicht 40 wird eine passive Kühlung der Brennkammer-Wand 3 bzw. der Aufbereitungskammer-Wand 17 erreicht. Dadurch fließt Wärme, die am heißesten Bereich der Schubkammer-Anordnung 1, nämlich im Bereich der Verengung 22 entsteht, in den Umgebungsbereich der Schubkammer-Anordnung 1 und insbesondere.zum Einspritzkopf und gibt einen Teil dieser Wärme an dem durch diesen durchfließenden Treibstoff ab. Eine Restwärme wird durch Strahlung in den Weltraum abgegeben. Dadurch verringert sich die Temperatur an der Innenseite der Aufbereitungskammer-Wand 17. Werden Brennmittel über die Zuführungskanäle 11, 12 in die Gemisch-Aufbereitungskammer 19 eingeführt, bewegen sich diese aufgrund der Ausrichtung der Zuführungskanäle 11, 12 und des Druckes, mit dem die Brennmittel zugeführt werden, drallartig an die Innenseite der Aufbereitungskammer-Wand 17 und bilden dort den Kühlfilm aus. Durch die wärmeleitende Schicht 40 können die Temperaturen im Bereich des Kühlfilms auch bei pulsierendem Betrieb des Triebwerks so niedrig gehalten werden, daß dieser nicht zeitweise verdampfen kann. Aufgrund dessen ist dieser Kühlfilm stabil. In Abhängigkeit des Materials, der für die Aufbereitungskammer-Wand 17 oder andere Teile der Brennkammer-Wand 3 sowie für den Einspritz-Kopf 7 verwendet werden, kann die Dicke der wärmeleitenden Schicht 40 und ihr Ort so gewählt werden, daß eine gewünschte Temperatur im Bereich des Kühlfilms besteht.

Vorzugsweise wird die wärmeleitende Schicht 40 galvanisch aufgetragen. Befindet sich die wärmeleitende Schicht 40 auf der Außenseite des zylinderförmigen Endes 27 des Einspritz-Kopfs 7 oder der Aufbereitungskammer-Wand 17 liegt die Schichtdicke vorzugsweise im Bereich zwischen 0,1 und 1,0 mm.

Die wärmeleitende Schicht 40 kann auch mittels einer Klemmverbindung zumindest an der Außenseite der Aufbereitungskammer-Wand 17, und zusätzlich auch an der Außenseite des zylinderförmigen Endes 27 des Einspritz-Kopfs 7 befestigt sein.

Auch ist es denkbar, daß durch Hinzufügen von Wärmeleit-Rohren oder Kupferleitungen die Wärme an anderer Stelle im Satelliten-System abgegeben wird und dadurch für gewünschte Heizleistungen verwendet wird. Eine Einsparung von Heizkreisen im Gesamtsystem des Satelliten ist dadurch möglich.

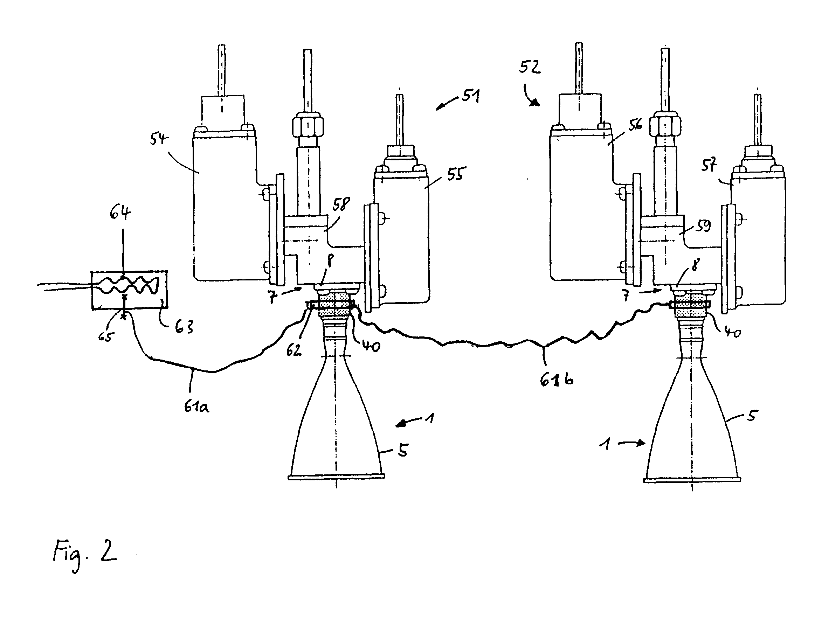

Eine Anordnung zur Nutzung von Wärmeenergie, die einer Schubkammer im Betrieb des Triebwerks entnommen wird, ist beispielhaft in der Anordnung der Fig. 2 dargestellt, wobei Bestandteile des in der Fig. 1 gezeigten Gegenstands, die nach Art und Funktion Bestandteilen des in der Fig. 2 gezeigten Gegenstands entsprechen, sind in der Fig. 2 mit demselben Bezugszeichen bezeichnet wie in Fig. 1.

Fig. 2 zeigt ein erstes Triebwerk 51 und ein zweites Triebwerk 52. Diese können zwei redundante Triebwerke aus einem Triebwerkssystem mit beispielsweise 16 Triebwerken darstellen, wobei während eines normalen Betriebszustands normalerweise das erste Triebwerk 51 aktiv und das zweite Triebwerk 52 passiv ist. Das in der Fig. 2 gezeigte erste 51 und zweite 52 Triebwerk ist dort schematisch mit zwei Treibstoffabsperrventilen 54, 55 bzw. 56, 57 gezeigt, die jeweils über einen Ventilkörper 58, 59 mit jeweils einer Schubkammer 1 mechanisch und funktionell verbunden sind. In jedem Ventilkörper 58 bzw. 59 befinden sich die Zuführungsleitungen (nicht gezeigt) zum Einspritzkopf 7, der über den Flansch 8 am Satelliten befestigt ist. An dem Flansch 8 schließt sich, wie in der Fig. 1 auch gezeigt, die Schubkammer 1 an. Um zumindest einen Teil des zylinderförmigen Endes 27 des Einspritzkopfs 7 und zumindest einen Teil der Aufbereitungskammerwand 17 herum ist die wärmeleitende Schicht 40 angeordnet.

Bei der Anordnung nach der Fig. 2 ist an einer Stelle der wärmeleitenden Schicht 40 eine erste Wärmeleitung 61a und eine zweite Wärmeleitung 61b angebracht. Zur Anbringung der Wärmeleitung 61a bzw. 61b an der wärmeleitenden Schicht 40 ist eine Verbindung nach dem Stand der Technik vorgesehen, beispielsweise eine Klemmverbindung oder Klemmschelle 62. Diese Verbindung könnte jedoch auch galvanisch in der wärmeleitenden Schicht 40 integriert sein. Für diesen Fall könnte an der wärmeleitenden Schicht 40 eine entsprechende Nase vorgesehen sein, an der ein Ende der Wärmeleitung 61a bzw. 61b angebracht sein kann. Die Wärmeleitungen 61a bzw. 61b verbinden die wärmeleitende Schicht 40 des ersten Triebwerks 51 mit der Außenseite eines Verbrauchers oder einer Satelliten-Komponente 63 mit einem Heizelement bzw. mit der wärmeleitenden Schicht 40 des zweiten Triebwerks 52. Der Anschluß von einem Verbraucher 63 und einer weiteren wärmeleitenden Schicht 40 über Wärmeleitungen 61a, 61b ist nur beispielhaft. Es können mit einer wärmeleitenden Schicht 40 auch mehrere andere wärmeleitende Schichten 40 und/oder mehrere Verbraucher 63 wärmeleitend verbunden sein. Der Verbraucher 63 nach der Figur 2 weist einen Heizkreis 64 zur Erwärmung technischer Geräte oder Bauteile im Raumfahrzeug auf. Zur Befestigung der ersten Wärmeleitung 61a an dem Verbraucher 63 und zum Übertragen der in der Wärmeleitung 61a strömenden Wärmeenergie zum Verbraucher 63 ist an diesem eine Befestigungsstelle oder Wärmeübertragungsfläche 65 vorgesehen. Dies kann eine Klemme oder Schraubverbindung sein .

Im Betrieb beispielsweise des ersten Triebwerks 51 tritt in der wärmeleitenden Schicht 40 normalerweise eine Temperatur im Bereich zwischen 100 und 300°C auf. Das zweite Triebwerk 52 ist in der Anordnung nach der Fig. 2 ein redundantes Triebwerk, das passiv ist, solange das erste Triebwerk 51 arbeitet. Im Falle eines Fehlers eines ersten Triebwerks 51 wird aufgrund entsprechender Steuersignale das zweite Triebwerk 52 aktiviert. Es muß sichergestellt sein, daß im Falle eines Umschaltens das zweite Triebwerk 52 sofort arbeiten kann. Dies setzt voraus, daß vor dem Starten des zweiten Triebwerks dessen Flüssigkeitsbereich vorzugsweise zwischen 0 und 40°C liegt. Dieser Temperaturbereich wird mittels weiterer Heizkreise erreicht, die an entsprechenden Stellen der Triebwerke 51, 52 angeordnet sind.

Erfindungsgemäß kann die in einer Schubkammer 1 eines aktiven Triebwerks 51 freiwerdende und sich in einer ersten wärmeleitenden Schicht 40 sammelnde Wärmeenergie mittels einer Wärmeleitung 61a zu einem Verbraucher 63 und/oder mittels einer Wärmeleitung 61b direkt auf eine zweite wärmeleitende Schicht 40 eines zweiten Triebwerks 52 geleitet werden. Die zum Verbraucher 63 gelangte Wärmemenge kann dazu dienen, ein im Verbraucher 63 befindliches Gerät oder auch einen Bereich eines Triebwerks 51 bzw. 52 in der Umgebung des Verbrauchers 63 zu erwärmen. Die mittels der Leitung 61b auf eine zweite wärmeleitende Schicht 40 eines weiteren Triebwerks 52 übertragene Wärmemenge erwärmt diese aufgrund der in der ersten wärmeleitenden Schicht 40 freiwerdenden Wärmemenge. Aufgrund der Wärmeabstrahlung im Weltraum können Triebwerksteile eine Temperatur bis zu -40°C annehmen, falls diese nicht vorgewärmt wird. Da diese Temperatur für den Betrieb vieler Geräte nicht zulässig ist, dient der erfindungsgemäße Gegenstand der Sicherstellung der Betriebsbereitschaft des Triebwerks.

Der Vorteil der Nutzung der. in der Schubkammer 1 eines aktiven Triebwerks 51 bzw. 52 freiwerdenden Wärmeenergie ist, daß passive Triebwerke mittels eines Verbrauchers 63 oder durch direkten Anschluß an die erfindungsgemäße wärmeleitende Schicht 40 ohne zusätzlichem oder mit nur geringem zusätzlichen Energieaufwand vorgewärmt werden können. Bei Umschaltvorgängen stehen diese mit großer Sicherheit zur Verfügung. Zum Vorwärmen solcher Triebwerke nach der erfindungsgemäßen Anordnung nach der Figur 2 wird keine oder nur relativ geringe Energie aus dem Thermalkontrollsystem des Satelliten benötigt.

Generell kann die Verwendung von Wärmeenergie, die aus einer wärmeleitenden Schicht 40 abgeführt wird, auch für andere Verbraucher des Satelliten verwendet werden, z.B. für dessen Treibstoffleitungen.

## Patentansprüche

1. Schubkammer-Anordnung (1) mit einer Expansionsdüse (5) und einer Brennkammer-Wand (3), an der ein Einspritz-Kopf (7) angebracht ist, wobei der dem Einspritz-Kopf (7) naheliegende Teil der Brennkammer-Wand (3) eine Aufbereitungskammer-Wand (17) ausbildet, in der die zur Verbrennung zugeführten Brennmittel zunächst einen Kühlfilm ausbilden, wobei zumindest in einem Bereich an der Außenseite der Aufbereitungskammer-Wand (17) eine wärmeleitende Schicht (40) aus wärmeleitendem Material vorgesehen ist, **dadurch gekennzeichnet, daß** die wärmeleitende Schicht (40) sich auch zumindest zum Teil über einen Bereich der Außenseite eines zylinderförmigen Endes (27) des Einspritz-Kopfs (7) erstreckt, das in die Aufbereitungskammer-Wand (17) übergeht.

2. Schubkammer-Anordnung nach Anspruch 1, **dadurch gekennzeichnet, daß** die wärmeleitende Schicht (40) aus Metall gebildet ist

3. Schubkammer-Anordnung nach dem Anspruch 2, **dadurch gekennzeichnet, daß** die wärmeleitende Schicht (40) aus Kupfer gebildet ist.

4. Schubkammer-Anordnung nach dem Anspruch 3, **dadurch gekennzeichnet, daß** die wärmeleitende Schicht (40) galvanisch aufgetragen ist.

5. Schubkammer-Anordnung nach dem Anspruch 4, **dadurch gekennzeichnet, daß** die wärmeleitende Schicht (40) eine Dicke zwischen 0,1 und 1,0 mm aufweist.

6. Schubkammer-Anordnung nach dem Anspruch 2, **dadurch gekennzeichnet, daß** die wärmeleitende Schicht (40) aus Beryllium oder einer Beryllium-Legierung gebildet ist.

7. Schubkammer-Anordnung nach dem Anspruch 2, **dadurch gekennzeichnet, daß** die wärmeleitende Schicht (40) aus einem keramischen Werkstoff gebildet ist.

8. Schubkammer-Anordnung nach einem der voranstehenden Ansprüche, **dadurch gekennzeichnet, daß** die wärmeleitende Schicht (40) mittels einer Klemmverbindung der Außenseite an der Aufbereitungskammer-Wand (17) befestigt ist.

9. Schubkammer-Anordnung nach dem Anspruch 8, **dadurch gekennzeichnet, daß** die wärmeleitende Schicht (40) zusätzlich an einem Bereich der Außenseite des zylinderförmigen Endes (27) des Einspritz-Kopfs (7) befestigt ist.

10. Schubkammer-Anordnung nach einem der Ansprüche 1 bis 9, **dadurch gekennzeichnet, daß** eine Schutzschicht gegen Oxidation vorgesehen ist, die sich zumindest über einen Teil der Innenseite der Aufbereitungskammer-Wand (17), über die zwischen der Aufbereitungskammer-Wand (17) und dem Einspritzkopf (7) gelegene Stirnseite der Aufbereitungskammer-Wand (17) und zumindest einen Teil der Außenseite der Aufbereitungskammer-Wand (17) erstreckt.

11. Schubkammer-Anordnung nach dem Anspruch 10, **dadurch gekennzeichnet, daß** die Schutzschicht aus Platin oder Gold gebildet ist.

12. Schubkammer-Anordnung nach dem Anspruch 11, **dadurch gekennzeichnet, daß** die Schutzschicht galvanisch aufgetragen ist.

13. Schubkammer-Anordnung nach einem der voranstehenden Ansprüche, **dadurch gekennzeichnet, daß** die an der wärmeleitenden Schicht (40) freiwerdende Wärme durch Wärmeleitelemente (61a, 61b, 62) an andere Bereiche (40, 63) im Satelliten-System geleitet wird, um diese vorzuwärmen.

## Claims

1. A thrust chamber assembly (1), comprising an expansion nozzle (5) and a combustion chamber wall (3) to which an injection head (7) is attached, the portion of the combustion chamber wall (3) close to the injection head (7) forming a preparation chamber wall (17) in which the propellants supplied for combustion initially form a cooling film, a heat-conducting layer (40) of thermally conductive material being provided at least in a zone on the outside of the preparation chamber wall (17), **characterised in that** the heat-conducting layer (40) also extends at least partially over a portion of the outside of a cylindrical end (27) of the injection head (7) which continues into the preparation chamber wall (17).

2. A thrust chamber assembly according to claim 1, **characterised in that** the heat-conducting layer (40) is made of metal.

3. A thrust chamber assembly according to claim 2, **characterised in that** the heat-conducting layer (40) is made of copper.

4. A thrust chamber assembly according to claim 3, **characterised in that** the heat-conducting layer (40) is applied galvanically.

5. A thrust chamber assembly according to claim 4, **characterised in that** the heat-conducting layer (40) has a thickness of between 0.1 and 1.0 mm.

6. A thrust chamber assembly according to claim 2, **characterised in that** the heat-conducting layer (40) is made of beryllium or a beryllium alloy.

7. A thrust chamber assembly according to claim 2, **characterised in that** the heat-conducting layer (40) is made of a ceramic material.

8. A thrust chamber assembly according to any one of the preceding claims, **characterised in that** the heat-conducting layer (40) is fixed to the outside of the preparation chamber wall (17) by means of a clamping connection.

9. A thrust chamber assembly according to claim 8, **characterised in that** the heat-conducting layer (40) is additionally fixed to a zone of the outside of the cylindrical end (27) of the injection head (7).

10. A thrust chamber assembly according to any one of claims 1 to 9, **characterised in that** there is provided a protective layer against oxidation which extends over at least a part of the inside of the preparation chamber wall (17), over the end face of the preparation chamber wall (17) located between the preparation chamber wall (17) and the injection head (7) and over at least a part of the outside of the preparation chamber wall (17).

11. A thrust chamber assembly according to claim 10, **characterised in that** the protective layer is made of platinum or gold.

12. A thrust chamber assembly according to claim 11, **characterised in that** the protective layer is applied galvanically.

13. A thrust chamber assembly according to any one of the preceding claims, **characterised in that** the heat released to the heat-conducting layer (40) is conducted by heat-conducting elements (61a, 61b, 62) to other areas (40, 63) in the satellite system in order to preheat them.

## Revendications

1. Système de chambre de poussée (1) avec un divergent (5) et une paroi de chambre de combustion (3) sur laquelle est montée une tête d'injection (7), moyennant quoi la partie de la paroi de chambre de combustion (3) située près de la tête d'injection (7) forme une paroi de chambre de préparation (17) dans laquelle les produits de combustion amenés à la combustion forment d'abord un film de refroidissement, moyennant quoi il est prévu une couche thermoconductrice (40) faite d'un matériau thermoconducteur au moins dans une zone sur le côté extérieur de la paroi de chambre de préparation (17), **caractérisé en ce que** la couche thermoconductrice (40) s'étend également au moins en partie sur une zone du côté extérieur d'une extrémité cylindrique (27) de la tête d'injection (7) qui se poursuit dans la paroi de chambre de préparation (17).

2. Système de chambre de poussée selon la revendication 1, **caractérisé en ce que** la couche thermoconductrice (40) est formée de métal.

3. Système de chambre de poussée selon la revendication 2, **caractérisé en ce que** la couche thermoconductrice (40) est formée de cuivre.

4. Système de chambre de poussée selon la revendication 3, **caractérisé en ce que** la couche thermoconductrice (40) est métallisée par galvanisation.

5. Système de chambre de poussée selon la revendication 4, **caractérisé en ce que** la couche thermoconductrice (40) présente une épaisseur entre 0,1 et 1,0 mm.

6. Système de chambre de poussée selon la revendication 2, **caractérisé en ce que** la couche thermoconductrice (40) est formée de béryllium ou d'un alliage de béryllium.

7. Système de chambre de poussée selon la revendication 2, **caractérisé en ce que** la couche thermoconductrice (40) est formée d'un matériau céramique.

8. Système de chambre de poussée selon l'une quelconque des revendications précédentes, **caractérisé en ce que** la couche thermoconductrice (40) est fixée à la paroi de chambre de préparation (17) à l'aide d'une jonction par serrage du côté extérieur.

9. Système de chambre de poussée selon la revendication 8, **caractérisé en ce que** la couche thermoconductrice (40) est fixée, en plus, à une zone du côté extérieur de l'extrémité cylindrique (27) de la tête d'injection (7).

10. Système de chambre de poussée selon l'une quelconque des revendications 1 à 9, **caractérisé en ce qu'**il est prévu une couche protectrice contre l'oxydation qui s'étend au moins sur une partie du côté intérieur de la paroi de chambre de préparation (17), au-dessus du côté frontal de la paroi de chambre de préparation (17) se trouvant entre la paroi de chambre de préparation (17) et la tête d'injection (7) et au moins sur une partie du côté extérieur de la paroi de chambre de préparation (17).

11. Système de chambre de poussée selon la revendication 10, **caractérisé en ce que** la couche protectrice est formée de platine ou d'or.

12. Système de chambre de poussée selon la revendication 11, **caractérisé en ce que** la couche protectrice est métallisée par galvanisation.

13. Système de chambre de poussée selon l'une quelconque des revendications précédentes, **caractérisé en ce que** la chaleur dégagée dans la couche thermoconductrice (40) est guidée à travers des éléments thermoconducteurs (61a, 61b, 62) vers d'autres zones (40, 63) dans le système satellite pour les préchauffer.
